(19) Europäisches Patentamt
European Patent Office
Office européen des brevets

(11) Publication number: 0 086 102 B1

# (12) EUROPEAN PATENT SPECIFICATION

(45) Date of publication of patent specification: 04.06.86

(51) Int. Cl.$^4$: C 08 G 59/68, C 08 G 59/40

(21) Application number: 83300601.8

(22) Date of filing: 07.02.83

## (54) Poyol/imidazole curing agents for epoxy resins.

(30) Priority: 08.02.82 US 346666

(43) Date of publication of application: 17.08.83 Bulletin 83/33

(45) Publication of the grant of the patent: 04.06.86 Bulletin 86/23

(84) Designated Contracting States: BE DE FR GB IT NL

(56) References cited:
GB-A-1 084 667
GB-A-1 370 576
US-A-2 928 810
US-A-3 635 844
US-A-3 989 673
US-A-4 189 564

(73) Proprietor: CELANESE CORPORATION
1211 Avenue of the Americas
New York New York 10036 (US)

(72) Inventor: Shimp, David A.
10100 Highway 329
Prospect Kentucky (US)

(74) Representative: De Minvielle-Devaux, Ian Benedict Peter et al
CARPMAELS & RANSFORD 43, Bloomsbury Square
London WC1A 2RA (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 086 102 B1

Courier Press, Leamington Spa, England.

## Description

The invention relates to a curable polyepoxide composition.

The field to which this invention pertains is curable compositions based upon mixtures of polyepoxide resins and imidazole type curing agents. More particularly, this invention involves liquid blends of monoimidazole curing agents and normally solid polyols used to cure liquid polyepoxides.

For many years in the epoxy plastics industry, attempts have been made to ensure that two-component compositions possess a long pot life and at the same time a short cure time. In other words, it is particularly desirable that the cure response of the combined epoxide resin/curing agent mixture is such that it may be used for several hours at working temperatures without an inordinate increase in viscosity. It is also important that the polyepoxide compositions exhibit a short cure time, so that long, expensive cure schedules at elevated temperatures are not required. This combination of long pot life and short cure schedule is particularly necessary in various plastics end uses, including forming auto springs, filament wound pipe and tanks and other fibre reinforced components. To date, no one resin system has exhibited the desired ratios of pot life and cure time.

In addition to this desired combination of cure properties, general use plastics compositions should be non-staining. of low toxicity, and in the cured state possess a high degree of chemical resistance. It is also necessary that these compositions maintain physical strength at elevated service temperatures and exhibit toughness at normal ambient temperatures.

In the prior art, solubility problems have made it extremely difficult to utilise normally solid, aliphatic polyols, particularly in 100% solids curing applications. Usually normally-solid polyols were incorporated into prior art epoxy-based compositions through the use of a solvent. However, when solvents are employed, increases in cure temperatures and times are required in order to drive the solvent off from the curing composition. In addition, as the solvent is removed during curing, voids can develop. On the other hand, previously-available liquid polyols, such as ethylene glycol and glycerine, exhibit poor compatibility with most liquid epoxy systems.

In the prior art the use of imidazole type curing agents has been found to be particularly desirable where a combination of long pot life and short cure time is required. However, the incorporation of solid imidazole curing agents into epoxide compositions has been particularly difficult because of their high reactivity with heated resin. Thus, like the polyol systems in the prior art, in order to incorporate solid imidazole catalysts, it has been necessary to employ a solvent. As a result, higher curing temperatures and longer curing times have been required in order to drive the solvent off from the finally-cured system. And like other prior art solvent systems, voids can develop during curing.

An alternative method of utilising imidazole catalysts has been to dissolve them in the liquid epoxy resin at elevated temperatures. However, this procedure has resulted in greatly decreased pot lives and working times for these high temperature solubilised systems.

By means of the present invention it is possible to prepare plastic-forming materials from liquid polyepoxides, normally solid polyols and imidazoles, which plastic materials exhibit increased pot lives, and at the same time relatively short, low-temperature cure schedules.

In addition, this invention makes it possible to prepare plastic compositions which are non-staining, of low toxicity and possess improved chemical resistance. Another advantage is that the invention makes it possible to prepare plastics which exhibit a combination of elevated temperature strength and ultimate tensile strain capability at room temperature unequalled by unmodified, catalytically cured epoxy resin plastics.

These remarkable advantages are obtained by means of the present invention.

This invention involves three important discoveries. The first is that by utilising either of N,N'-dihydroxyethyl 5,5-dimethyl hydantoin or trimethylpentanediol, in combination with a normally solid, eutectic-forming imidazole, a liquid polyepoxide curing system is obtained which is useful in preparing plastics compositions having improved properties.

Secondly it has been discovered that liquid monoimidazoles in which the above-described solid, aliphatic diols are soluble may also be used to prepare plastics compositions having improved properties.

Finally, imidazoles are effective catalysts for promoting the addition of epoxides to aliphatic hydroxyls. The incorporation of small but well defined amounts of diols into the catalytically-cured, thermoset, epoxy resin matrix effectively stress relieves the cross-linked plastic, resulting in an improved combination of heat distortion temperature and tensile strain at ambient temperatures.

The key to this invention is that either by solubilisation of the polyols in the liquid imidazole or through the formation of a liquid eutectic between the imidazole and the polyol, a composition is obtained which exhibits improved plastics properties.

The present invention provides a curable polyepoxide composition comprising a compatible mixture of a polyepoxide and a blend of an aliphatic polyol selected from N,N'-dihydroxyethyl 5,5-dimethyl hydantoin and trimethylpentanediol and a monoimidazole compound selected from unsubstituted imidazole, 1-methyl imidazole, 2-methyl imidazole, 2-ethyl-4-methyl imidazole and 2-phenyl-imidazole.

The present invention also provides a process for forming a cured plastics composition which comprises:

(a) forming a liquid mixture through either dissolution or eutectic formation between a polyol selected

from N,N'dihydroxyethyl 5,5-dimethyl hydantoin and trimethylpentanediol and a monoimidazole compound selected from unsubstituted imidazole, 1-methyl imidazole, 2-methyl imidazole, 2-ethyl-4-methyl imidazole and 2-phenyl-imidazole;

(b) blending the resulting liquid with a liquid polyepoxide; and

(c) curing the resulting blend.

The polyepoxides useful in this invention must be liquid in nature and must be soluble in the polyol/monoimidazole blend. By liquid in nature, it is meant that the polyepoxides must have a maximum viscosity of 5 Pa · s (5,000 cP) at 150°F (65.5°C). Preferably, the polyepoxide should have a maximum viscosity of 10 Pa · s (10,000 cP) at ambient temperatures. In addition, the polyepoxides must be based upon an aromatic polyol, polycarboxylic acid or aromatic polyamine. Finally, the polyepoxide material must contain terminal epoxide groups of the 1,2 or vicinal type.

Among the aromatic, phenolic polyepoxides useful in this invention are glycidyl polyethers of polyhydric phenols containing more than one 1,2-epoxide group per molecule. Such polyepoxide resins are generally derived from a dihydric phenol and an epihalohydrin and have epoxide equivalent weight of about 150 to 300. Examples of the epihalohydrins are epichlorohydrin, epibromohydrin, epiiodohydrin, with epichlorohydrin being preferred. The dihydric phenols are exemplified by resorcinol, hydroquinone, p,p-dihydroxyphenyl propane (or Bisphenol A as it is commonly called), p,p-dihydroxybenzophenone, p,p'-dihydroxydiphenyl, p,p-dihydroxydiphenyl ethane, bis(2-hydroxynaphthyl)-methane, 1,5-dihydroxynaphthalene, ethylene glycol, propylene glycol, 1,4-butanediol, hydrogenated Bisphenol A, 1,4-cyclohexanediol, 1,3-cyclopentanediol, cyclohexane dimethanol and the like. These polyepoxide resins are well known in the art. Preferably the polyepoxide resins are made by reacting the epihalohydrin in an amount at least equal to the phenolic hydrogens, and most preferably in excess. The preferred polyepoxide resins are the glycidyl polyethers of Bisphenol A, having an epoxide equivalent weight of about 170 to 200.

A second type of polyepoxide which is useful in the present invention is a glycidyl polyester prepared by reacting an epihalohydrin, such as epichlorohydrin, with an aromatic or aromatic-based polycarboxylic acid, such as, for example, one of the phthalic or phthalic-based acids and then dehydrohalogenating under reduced temperatures. The preparation of polyglycidyl-esters is further described in U.S. Patent No. 3,859,314.

A third type of polyepoxide compound is the so-called amino polyepoxide prepared by reacting an aromatic polyamine, wherein the amine group is attached directly to the aromatic ring, with an epihalohydrin and then dehydrohalogenating using an added alkali compound, such as a caustic solution. Examples of the aromatic polyamines include aniline, o-, m-, and p-toluidine and methylenedianiline. The preparation of these materials is further described in U.S. Patent No. 3,310,528.

Regardless of which type of polyepoxide is chosen, it is essential that the final product contain less than about 0.5% by weight of hydrolysable chlorine. Hydrolysable chlorine is defined as that amount of chlorine which may be removed by alkaline catalysed hydrolysis. If greater than this amount of hydrolysable chlorine is present, the imidazole in the epoxide curing mixture may become salted with the chlorine and lose its reactivity.

Two essential polyols are included within the scope of this invention. Both are methyl branched diols which are normally solid at room temperature and soluble in epoxy resins, particularly those derived from Bisphenol A. The first is N,N'-dihydroxyethyl 5,5-dimethyl hydantoin. It is available from Glyco Chemicals, Inc. by the trade name of Dantocol DHE and is represented by the formula:

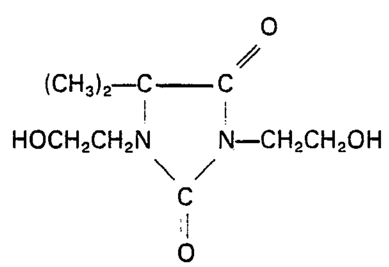

The second solid polyol which is useful in the present invention is trimethylpentanediol, and has the formula:

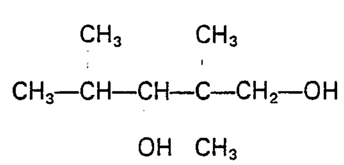

The third essential component of the present invention is either a liquid monoimidazole, such as 1-methylimidazole, which has the formula

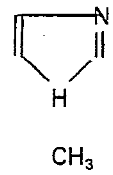

and has a melting point of −2°C., or a solid form imidazole selected from unsubstituted imidazole, 2-methylimidazole, 2-ethyl-4-methylimidazole and 2-phenylimidazole which forms a liquid eutectic with either of the polyols identified above.

As used herein the term "liquid eutectic" means a blend of normally solid compositions, each individually melting above 25°C., which is pourable and handleable as a liquid at 25°C due to depression of the molecularly blended material freezing point below 25°C.

In preparing the compositions of the invention several different types of imidazoles and polyepoxides may be utilised in the same system. However, the ratio of the ingredients useful in this present invention is limited. About 0.05 to about 0.4 hydroxyl equivalents in the polyol are mixed with each epoxide group in the polyepoxide. Preferably the mixture contains about 0.10 to about 0.20 hydroxyl equivalents per epoxide equivalent. The monoimidazole catalyst is added in the weight range of about 0.5 to 5.0 percent, based upon the total weight of polyepoxide, polyol and imidazole. Preferably, the monoimidazole is mixed in the 1—2% by weight range.

In addition to the above active components, the compositions of this invention may be modified with minor amounts of other active hydrogen containing reactants, including other polyols as well as substituted ureas, polyphenols, polycarboxylic acids, water and the like. Examples of the other polyols which are useful as modifiers in conjunction with one or more of the essential polyols described above include solid form neopentyl glycol, trimethylolpropane, bis(hydroxyethyl) terephthalate, tris(hydroxyethyl) cyanurate, 1,4-dimethylol cyclohexane, liquid form 1,4-butanediol and glycerin. Also, the compositions of this invention may be modified with conventional pigments, reinforcing agents, fibres, fillers and other materials well known in the art. Fibreglass, quartz and other siliceous materials constitute a particularly useful class of reinforcing fibres and mineral fillers for modification of the neat resin-curing agent compositions described herein.

The compositions of the present invention may be employed in a wide variety of procedures. For example, all the separate components may be mixed together simultaneously and the material used for the desired plastics end use. In the alternative, and in a preferred embodiment, the polyhydroxy material and the imidazole are premixed to form a liquid material, either via the eutectic route, in which case the imidazole and the polyol are both solid but form a liquid eutectic upon mixing, or by dissolving the solid polyol in the liquid substituted imidazole to form a liquid mixture. Either of the blends then is mixed with the liquid polyepoxide using standard techniques.

The resulting curable composition has an extended pot life—at room temperature it may be as long as eight hours—and may even be used at elevated temperatures. For example, the mixed compositions of this invention may be used at a pot temperature of 100°F (38°C), with a working life of as much as four hours. In addition, the materials of the present invention exhibit improved heat distortion temperatures, particularly if blended with siliceous or alumina type fillers and reinforcements. The term siliceous filler and reinforcement includes silicas, silicates and silicon containing glasses in the form of particulate minerals and fibres.

The polyol/imidazole systems of the invention also exhibit outstanding reactivity which is intermediate between aromatic amine epoxide systems and anhydride cured epoxide systems. The chemical resistance, thermal stability and physical strength properties of the present composition are excellent. The impact strength of these materials is comparable to other cured epoxides and is superior to vinyl ester systems.

The compositions of the present invention may be used in casting, moulding and virtually any type of plastics end use application where a relatively long pot life and relatively high curing reactivity is desired. As previously pointed out, the compositions of the invention find particular utility when used as chemically resistant pipes and fittings, as cast tools, moulds, bench tops, liquid epoxy resin matrix compositions for fibre reinforcing composites, as automobile suspension springs, filament windings and the like.

The following Examples will illustrate the invention in more detail. Parts and percentages are by weight, unless otherwise specified.

The components used hereafter are more specifically described in the following columns:

| Component | Properties | Comments |
|---|---|---|
| Imidazole | Melting point 88°—90°C. | |
| 1-methylimidazole | Melting point −1° — −2°C. | |
| 2-methylimidazole | Melting point 136°—138°C. | |
| 2-phenylimidazole | Melting point 145°C. | |
| N-vinylimidazole | Liquid @ RT | |
| N-allylimidazole | Liquid & RT | |
| Benzimidazole | Melting point 172—174°C. | |
| EpiRez 509* | Viscosity at 77°F (25°C) 7—9 Pa · s. (7,000—9000 cP), weight per epoxide 178—193 | Available from celanese plastics & specialties company |
| Dantocol DHE | Melting point 62°—65°C. | Available from glyco chemicals, inc. |
| Trimethylpentanediol | Melting range 46°—55°C. | Available from eastman chemical products, inc. |
| Trimethylolpropane | Melting range 57—59°C. | Available from celanese chemical company |

*EpiRez 509 is a diglycidyl ether of bisphenol A.

Example 1

In order to demonstrate the superior properties of the compositions of the invention, blends of 80% Dantocol DHE polyol and 20% of the imidazole set forth in the following table were prepared by stirring and heating to form where necessary a liquid eutectic.

Curing agent composition and properties

| Imidazole | Blending temp. | Gardner-Holdt viscosity @ RT | Crystal formation 1 week @ RT |
|---|---|---|---|
| A None (control) | | $Z_4$—$Z_5$* | None* |
| B Unsubstituted | 60°C. | $Z_3$—$Z_4$ | None |
| C N-vinyl | 25°C. | X—Y | None |
| D N-methyl | 25°C. | X—Y | None |
| E N-allyl | 25°C. | X | None |
| F 2-phenyl | 75°C. | $Z_7$ | None |
| G 2-ethyl-4-methyl | 25°C. | $Z_2$ | None |
| H 2-methyl | 80°C. | $Z_5$ | None |
| I Benzimidazole | 85°C. | $>Z_7$ | Partial |

*Dantocol DHE in supercooled liquid state.
RT=room temperature.

Properties of epoxy resin/curing agent blends

7 parts of the above curing agent material were then blended with 93 parts of EpiRez 509, and 1/8" (3.2 mm) thick castings were gelled at 250°F (121°C) and cured for 1 hour at 350°F (177°C), with the following results:

| | Gel time @ | | Cured casting | |
|---|---|---|---|---|
| RT | 121°C (250°F)* | 150°C (302°F)* | Appearance | $T_g$ (°C) |
| A Non reactive | | | Does not gel in 1 hr @ 350°F (177°C) | No test |
| B 1—2 days | 4 min. | <1 min. | Opaque, brown | 131 |
| C 6 days | >30 min. | >30 min. | Very soft | No test |
| D 1—2 days | 5 min. | 2 min. | Opaque, brown | 135 |
| E 2—3 days | >30 min. | >30 min. | Very soft | No test |
| F 3—6 days | >5 min. <20 min. | 10 min. | Translucent, amber | 78 |
| G 3—6 days | >5 min. <20 min. | 10 min. | Translucent, amber | 82 |
| H 1—2 days | 5 min. | <1 min. | Sl. translucent, brown | 116 |
| I >6 days | >30 min. | >30 min. | Does not gel in 1 hr @ 350°F (177°C) | No test |

*Stroke gel conducted on a few drops of the mixed system placed on a metal cure metal maintained at the temperature indicated.

RT=room temperature

As can be seen from the above table, only imidazole, N-methylimidazole, 2-phenylimidazole, 2-ethyl-4-methylimidazole and 2-methylimidazole provide products having a satisfactory cure response. Other similar materials do not react as desired.

Example 2

A blend was prepared for 16.2 parts of Dantocol DHE and 4.8 parts of unsubstituted imidazole. The resulting material exhibited a Gardner Holdt viscosity of $Z_4$—$Z_5$. 10.5 parts of this material were blended with 139.5 parts of EpiRez 509. At 250°F (121°C) the material in a 1/8" (3.2 mm) thick casting gelled within 5 minutes. It was then cured for 1 hour at 350°F (177°C), producing an opaque casting which exhibited a heat distortion temperature of 142°C, a tensile strength of 483 bar (7000 psi), a tensile elongation of 2.5% and a tensile modulus of 24.8 kbar ($0.36 \times 10^6$ psi).

Example 3

A. Using the cure schedule set forth in Example 1, castings were prepared using 147 parts of EpiRez 509 and 3 parts of 2-ethyl-4-methylimidazole.

B. A second example was prepared by mixing 180 parts of EpiRez 509 with 16 parts of trimethylpentanediol and 4 parts of 2-ethyl-4-methylimidazole and curing using the cure schedule of Example 1.

C. A third example contained 180 parts of EpiRez 509, 16 parts of Dantocol DHE and 4 parts of 2-ethyl-4-methylimidazole. The blend was gelled at 250°F (121°C) and cured 1 hour at 350°F (177°C) with the following results:

| | Heat distortion temperature | Tensile strength (bar) | Tensile elongation |
|---|---|---|---|
| 3—A | 104°C | 607 (8800 psi) | 2.2% |
| 3—B | 110°C | 558 (8100 psi) | 3.3% |
| 3—C | 136°C | 510 (7400 psi) | 3.2% |

As can be seen, castings prepared *not* employing both the polyol and the imidazole (e.g., Example 3—A), are deficient in heat distortion properties and tensile properties when compared to the combined systems of the present invention (e.g., Example 3—B and 3—C).

Example 4

A. 20 parts of Dantocol DHE were blended with 6.7 parts of trimethylolpropane and 6.7 parts of 1-methylimidazole. The resulting eutectic blend was clear and had a Gardner Holdt 25°C viscosity of W-X.

B. In a second blend 20 parts of Dantocol DHE were mixed with 6.7 parts of neopentylglycol and 6.7 parts of 1-methylimidazole. The resulting blend exhibited a Gardner-Holdt 25°C viscosity of T and was clear after one month at room temperature.

C. 186 parts of EpiRez 509 were then blended with 14 parts of 4—A, gelled for two minutes at 250°F (121°C), and cured for one hour at 350°F (177°C). The resulting casting was opaque and exhibited a heat distortion temperature of 143°C, a tensile strength of 393 bar (5700 psi), a tensile elongation of 2.0% and a tensile modulus of 23.4 kbar ($0.34\times10^6$ psi).

D. In a similar fashion, 186 parts of EpiRez 509 were blended with 14 parts of 4—B, gelled for 2 minutes at 250°F (121°C) and cured for one hour at 350°F (177°C). The resulting casting prepared using a lined mould exhibited a heat distortion temperature of 133°C, a tensile strength of 514 bar (7460 psi), a tensile elongation of 2.9% and a tensile modulus of 25.5 kbar ($0.37\times10^6$ psi).

Example 5

24 parts of Dantocol DHE were blended with 6 parts of 1-methylimidazole, resulting in a blend having a Gardner-Holdt 25°C viscosity of X-Y. The blend contained some crystals after one week at room temperature. 10.5 parts of this blend were mixed with 139.5 parts of EpiRez 509. It gelled after 9 minutes at 250°F (121°C) and was cured for one hour at 350°F (177°C), resulting in an opaque casting having a heat distortion temperature of 139°C, a tensile strength of 490 bar (7109 psi), a tensile elongation of 3.0% and a tensile modulus of 21.4 kbar ($0.31\times10^6$ psi).

Example 6

In order to demonstrate the unexpectedly superior property of incorporating silica type materials into the compositions of this invention, 100 parts of EpiRez 509 were mixed with 125 parts of Super White silica mineral flour and 7 parts of the Dantocol DHE/1-methylimidazole blend prepared in Example 5. This material was gelled at 250°F (121°C) and then cured for 1 hour at 350°F (177°C). The casting was cut in half and one half was post-cured for 30 minutes at 400°F (204°C). The portion of the casting cured only at 350°F (177°C) exhibited a heat distortion temperature of 162°C, compared to 139°C for the casting prepared in Example 5 containing no silica filler. Post-curing the silica filled casting at 400°F (204°C) did not increase the heat distortion temperature (158°C)

Example 7

Several curing agents were prepared and then mixed with epoxy resins to illustrate the effect of curing agent composition on pot life characteristics.

A. 7 parts of a blend comprising 60% Dantocol DHE, 20% trimethylolpropane and 20% 1-methylimidazole were blended with 93 parts of EpiRez 509. The initial Brookfield viscosity of the system at 77°F (25°C) was 8.26 Pa · s (8260 cP). At 7 hours the viscosity was 12 Pa · s (12,000 cP). At 22 hours the viscosity was 109 Pa · s (109,000 cP). Pot life characteristics were also evaluated at 100°F (38°C). After 2 hours the viscosity was 2.48 Pa · s (2480 cP), while after 7 hours the viscosity was 13.8 Pa · s (13,800 cP).

B. 10 parts of a blend comprising 80% trimethylpentanediol and 20% 2-ethyl-4-methylimidazole were mixed with 90 parts of EpiRez 509. After 1 hour at 77°F (25°C) the viscosity was 3.75 Pa · s (3750 cP). At 22 hours the viscosity was 8.2 Pa · s (8200 cP).

C. A conventional system was prepared by mixing 18.4 parts of a blend containing 60% Tonox, an aniline formaldehyde polyamine curing agent manufactured by Naugatuck Division of UniRoyal, Inc., and 40% m-phenylene diamine with 81.6 parts of EpiRez 509. The initial blend exhibited a Brookfield viscosity of 8.2 Pa · s (8200 cP). After 7 hours at 77°F (25°C) the viscosity was 18.7 Pa · s (18,700 cP). After 22 hours, the material was solid. After 1 hour at 100°F (38°C) the Brookfield viscosity of the blend was 2.64 Pa · s (2640 cP). After 5 hours at 100°F (38°C) it had risen to 15.4 Pa · s (15,400 cP), and after 7 hours the viscosity was 105 Pa · s (105,000 cP).

As can be seen from the above table, Examples 7—A and 7—B, the examples of the present invention, provide superior long-term pot life when compared to conventional prior art systems.

Example 8

A blend prepared from 60 parts of Dantocol DHE, 20 parts of trimethylolpropane and 20 parts of unsubstituted imidazole formed a clear, pale, yellow liquid which had a Gardner-Holdt viscosity of $Z_1$—$Z_2$. Castings were prepared by mixing the amount of EpiRez 509 indicated below. The castings were gelled at 250°F (121°C) and cured for 1 hour at 350°F (177°C).

A. 10 parts of the above curing agent were blended with 90 parts of EpiRez 509 to produce a polyol OH/epoxide ratio of 0.20 and a polyol OH+imidazole NH/epoxide ratio of 0.26. The material gelled after 3

minutes at 250°F (121°C). A cured casting prepared from this material was opaque and exhibited a heat distortion temperature of 111°C, a tensile strength of 683 bar (9910 psi), a tensile elongation of 6.3% and a tensile modulus of 23.4 kbar ($0.34 \times 10^6$ psi).

B. 7 parts of the above curing agent were blended with 93 parts of EpiRez 509 to produce a material having a polyol OH/epoxide ratio of 0.14 and a polyol OH+imidazole NH/epoxide ratio of 0.18. The material gelled after 5 minutes at 250°F (121°C). A cured casting prepared from this material was opaque, exhibited a heat distortion temperature of 139°C, a tensile strength of 532 bar (7714 psi), a tensile elongation of 3.0 and a tensile modulus of 25.5 kbar ($0.37 \times 10^6$ psi).

Example 9

Using 1/8"×1/2"×5" (3.2×12.7×127 mm) plastics bars prepared based on the polyol/imidazole curing agent formulation described in Example 2 (9—A), and the aromatic amine curing agent blend described in Example 7(c) (9—B), an evaluation of the chemical resistance properties of the two systems was carried out. In this evaluation, the plastics bars were immersed in an acid, a base, and a strong solvent, at various temperatures for a period of 480 hours, with the following results:

| | 9—A | 9—B |
|---|---|---|
| % weight gain after 480 hours immersion in: 10% $H_2SO_4$ (aqueous) at 200°F (93°C) | 2.2% | 4.2% |
| 20% NaOH (aqueous) at 200°F (93°C) | 1.6% | 1.8% |
| Methylethylketone at 77°F (25°C) | 0.2% | 1.6% |

In carrying out the above tests, no dulling, etching, cracking or blistering effects were observed, which indicated that the percent weight gain was proportional to the amount of chemical absorbed by the plastic. As can be seen, the cured compositions of the present invention exhibit clearly superior chemical resistance properties compared to prior art compositions based upon aromatic amines.

**Claims**

1. A curable polyepoxide composition comprising a compatible mixture of a polyepoxide and a blend of an aliphatic polyol selected from N,N'-dihydroxyethyl 5,5-dimethyl hydantoin and trimethylpentanediol and a monoimidazole compound selected from unsubstituted imidazole, 1-methylimidazole, 2-methylimidazole, 2-ethyl-4-methylimidazole and 2-phenylimidazole.

2. The composition of claim 1 wherein the polyol/imidazole blend is a liquid eutectic.

3. The composition of claim 1, wherein the polyepoxide is a polyglycidyl ether of Bisphenol A.

4. The composition of claim 3, wherein the imidazole is 1-methylimidazole.

5. The composition of claim 3, wherein the imidazole is selected from unsubstituted imidazole, 2-methylimidazole, 2-phenylimidazole, and 2-ethyl-4-methylimidazole.

6. The composition of any of claims 1—5 comprising an added siliceous filler or fibrous reinforcement.

7. A process for forming a cured plastics composition which comprises:

(a) forming a liquid mixture through either dissolution or eutectic formation between a polyol selected from N,N'dihydroxyethyl 5,5-dimethyl hydantoin and trimethylpentanediol and a monoimidazole compound selected from unsubstituted imidazole, 1-methylimidazole, 2-methylimidazole, 2-ethyl-4-methylimidazole and 2-phenylimidazole.

(b) blending the resulting liquid with a liquid polyepoxide; and

(c) curing the resulting blend

8. The process of claim 7 wherein the polyol is dissolved in the monoimidazole, and the monoimidazole is 1-methylimidazole.

9. The process of claim 7 wherein a liquid eutectic is formed and the monoimidazole is selected from unsubstituted imidazole, 2-methylimidazole, 2-phenylimidazole, and 2-ethyl-4-methylimidazole.

**Patentansprüche**

1. Härtbare Polyepoxid-Zusammensetzung, umfassend eine kompatible Mischung eines Polyepoxids und eines Gemischs aus einem aus N,N'-Dihydroxyethyl-5,5-dimethylhydantoin und Trimethylpentandiol ausgewählten aliphatischen Polyol und einer aus unsubstituiertem Imidazol, 1-Methylimidazol, 2-Methylimidazol, 2-Ethyl-4-methylimidazol und 2-Phenylimidazol ausgewählten Monoimidazol-Verbindung.

2. Zusammensetzung nach Anspruch 1, dadurch gekennzeichnet, daß das Polyol-Imidazol-Gemisch ein flüssiges Eutektikum ist.

3. Zusammensetzung nach Anspruch 1, dadurch gekennzeichnet, daß das Polyepoxid ein Polyglycidylether von Bisphenol A ist.

4. Zusammensetzung nach Anspruch 3, dadurch gekennzeichnet, daß das Imidazol 1-Methylimidazol ist.

5. Zusammensetzung nach Anspruch 3, dadurch gekennzeichnet, daß das Imidazol aus unsubstituiertem Imidazol, 2-Methylimidazol, 2-Phenylimidazol und 2-Ethyl-4-methylimidazol ausgewählt ist.

6. Zusammensetzung nach irgendeinem der Ansprüche 1 bis 5, enthaltend ein siliciumdioxidhaltiges Füllstoffmaterial oder faserförmiges Verstärkungsmittel.

7. Verfahren zur Herstellung einer gehärteten Kunststoffmasse, umfassend

(a) des Herstellen einer flüssigen Mischung, entweder durch Auflösen oder durch Bilden eines Eutektikums, zwischen einem aus N,N'-Dihydroxyethyl-5,5-dimethylhydantoin und Trimethylpentandiol ausgewählten aliphatischen Polyol und einer aus unsubstituiertem Imidazol, 1-Methylimidazol, 2-Methylimidazol, 2-Ethyl-4-methylimidazol und 2-Phenylimidazol ausgewählten Monoimidazol-Verbindung,

(b) das Mischen der erhaltenen Flüssigkeit mit einem flüssigen Polyepoxid und

(c) das Härten des erhaltenen Gemischs.

8. Verfahren nach Anspruch 7, dadurch gekennzeichnet, daß das Polyol in dem Monoimidazol aufgelöst wird und das Monoimidazol 1-Methylimidazol ist.

9. Verfahren nach Anspruch 7, dadurch gekennzeichnet, daß ein flüssiges Eutektikum gebildet wird und das Monoimidazol aus unsubstituiertem Imidazol 2-Methylimidazol, 2-Phenylimidazol und 2-Ethyl-4-methylimidazol ausgewählt wird.

**Revendications**

1. Composition de polyépoxyde durcissable comprenant un mélange compatible d'un polyépoxyde et d'un mélange d'un polyol aliphatique choisi parmi la N,N'-dihydroxyéthyl 5,5'-diméthyl hydantoïne et le triméthylpentanediol et un composé de monoimidazole, choisi parmi l'imidazole non substitué, le 1-méthylimidazole, le 2-méthylimidazole, le 2-éthyl-4-méthylimidazole et le 2-phénylimidazole.

2. Composition de la revendication 1, où le mélange polyol/imidazole est un liquide eutectique.

3. Composition de la revendication 1, où le polyépoxyde est un polyglycidyl éther de Bisphénol A.

4. Composition de la revendication 3, où l'imidazole est le 1-méthylimidazole.

5. Composition de la revendication 3, où l'imidazole est choisi parmi l'imidazole non substitué, le 2-méthylimidazole, le 2-phénylimidazole et le 2-éthyl-4-méthylimidazole.

6. Composition de l'une des revendications 1—5 comprenant une charge siliceuse ou un renforcement fibreux ajouté.

7. Procédé pour former une composition plastique durcie qui comprend:

(a) la formation d'un mélange liquide soit par dissolution ou par formation eutectique entre un polyol choisi parmi la N,N'-dihydroxyéthyl 5,5-diméthylhydantoïne et le triméthylpentanediol et un composé de monoimidazole choisi parmi l'imidazole non substitué, le 1-méthylimidazole, le 2-méthylimidazole, le 2-éthyl-4-méthylimidazole et le 2-phénylimidazole.

(b) le mélange du liquide résultant avec un polyépoxyde liquide; et

(c) le durcissement du mélange résultant.

8. Procédé de la revendication 7, où le polyol est dissous dans le monoimidazole et le monoimidazole est le 1-méthylimidazole.

9. Procédé de la revendication 7, où un liquide eutectique est formé et le monoimidazole est choisi parmi l'imidazole non substitué, le 2-méthylimidazole, le 2-phénylimidazole et le 2-éthyl-4-méthylimidazole.